# EUROPEAN PATENT SPECIFICATION

(11) **EP 1 197 037 B1**
(45) Date of publication and mention of the grant of the patent: **19.03.2008**
(21) Application number: 00946695.4
(22) Date of filing: 30.06.2000
(51) Int. Cl.: H04L 12/18, H04L 12/56, H04N 7/173, H04L 29/06

(54) **PROCEDURE AND SYSTEM FOR DISTRIBUTING STREAMING MEDIA IN AN IP-NETWORK**
VERFAHREN UND SYSTEM ZUM VERTEILEN VON MEDIENSTRÖMERN IN EINEM IP-NETZ
PROCEDE ET SYSTEME DE DISTRIBUTION DE MEDIAS EN CONTINU DANS UN RESEAU IP

(30) Priority: 01.07.1999 SE 9902517
(43) Date of publication of application: 17.04.2002
(73) Proprietor: TeliaSonera AB, 106 63 Stockholm (SE)
(72) Inventor: BENGTSSON, Johan, E., S-976 32 Lulea (SE); BERGSTEN, Anders, S-977 52 Lulea (SE); KALLA, Thomas, S-972 42 Lulea (SE); KLITTBY, Nils-Aake, S-976 32 Lulea (SE); LEPPÄJÄRVI, Ann-Catrin, S-977 54 Lulea (SE); NILSSON, Peter, S-941 65 Lulea (SE); OLOFSSON, Sven-Rune, S-972 45 Lulea (SE)
(74) Representative: Hopfgarten, Nils
(86) International application number: PCT/SE2000/001408
(87) International publication number: WO 2001/003373

(56) References cited:
- WO-A1-99/17227
- WO-A2-98/24208
- US-A- 5 592 626
- US-A- 5 737 747
- US-A- 5 758 085
- S.-H.G. CHAN ET AL.: 'Threshold-based admission policies for video services' IEEE GLOBAL TELECOMMUNICATIONS CONFERENCE, 1999. GLOBECOM vol. 4, 05 December 1999 - 09 December 1999, pages 2076 - 2080, XP002932728
- CHUANG J.C.I.: 'Economies of Scale in Information Dissemination over the Internet' DOCTORAL THESIS. CARNEGIE MELLON UNIVERSITY November 1998, PITTSBURGH, PENNSYLVANIA, US, pages 1-9,41-109,141 - 147 ISBN: 0-599-17170-7
- HOFMANN M. ET AL: 'Caching Techniques for Streaming Multimedia over the Internet' BELL LABS TECHNICAL MEMORANDUM BL011345-990409-04TM, [Online] April 1999, Retrieved from the Internet: <URL:http://www.bell-labs.com/user/kguo/tr- dir/stream-arch-tm-99.pdf>

## Description

### TECHNICAL FIELD

The present invention relates to procedures and system for policy-controlled distribution of streaming media in an IP-network.

### TECHNICAL BACKGROUND

The Internet of today often has insufficient transmission capacity when one wants to distribute multimedia material (streaming, or "direct played-back", media) with large content of data, parallel to a large number of end consumers, for instance by IP-multicast. The reason for this is, among other things, that sufficient transmission capacity for parallel transmissions is lacking at the content providers. Other reasons can be an insufficient bandwidth in the IP-network, or lack of means for securing quality of delivery at the content provider and/or the distributor.

Due to the poor transmission capacity on Internet, for instance a video transmission, or the like, which is distributed according to known technology for distribution of streaming media, can be subject to unwanted interruptions in the media flow. With the aim of reducing the risk of interruption in the media flow, often a temporary caching of the data flow from the content provider is utilized. In practice the caching implies that the transmission will be somewhat delayed, but in almost all cases this delay is of minor importance to the end consumer. Usually the caching is made locally in the end consumer's terminal. If the content provider is located, in the network, a long distance from the end consumer, for instance if there are a large number of network nodes in between, interruption in the media flow, however, can occur if there in the IP-network is created a high load during the transmission.

Another problem of the known technology is that the transmission has to be adapted to a certain bandwidth. For instance, the image or sound quality of the multimedia material has to be reduced with the aim of adapting the transmission to the one of the end users who has the lowest available bandwidth, so the quality will be unnecessary low for other end consumers. Alternatively, a higher quality of the multimedia material is utilized, which requires a larger bandwidth for the consumers, at which consequently certain potential end consumers are excluded from the transmission because of insufficient bandwidth.

Another problem at multimedia transmissions via IP-multicast according to known technology is that late joining end consumers have no possibility to receive the whole transmission.

Yet another problem is how to economize on the available network resources.

The document CHUANG JCI : "Economies of scale in information dissemination over the Internet, "DOCTORAL THESIS. CARNEGIE MELLON UNIVERSITY, November 1998, Pittsburgh, Pennsylvania, US ISBN : 0-599-1.7170-7, studies the different levels and dimensions along which economies of scale (EoS) savings may be realized when information is disseminated over the Internet. At the information transport level, EoS savings may be realized through just-in-time delivery, multicast, network caching and replication strategies. This document offers the vision of and motivation for a distributed network storage infrastructure with service guarantees. Caching and replication can be treated as different service classes within a unified Quality-of-Service (QoS) framework. Key components of the distributed network storage architecture include: service specification, resource reservation, resource mapping, admission control, real-time resource management and pricing. After establishing a research roadmap, this document focuses on the resource mapping problem and develops a formal mapping model, allowing services with different traffic profiles and performance specifications to be mapped into an optimal combination of storage and transmission resources. The model is also extended to tackle network storage capacity planning problems.

The document HOFMANN M. ETAL: "Caching Techniques for Streaming Multimedia over the Internet", BELL LABS TECHNICAL MEMORANDUM BLO11345-990 409-04TM, April 1999, Retrieved from the Internet: http: //www.bell- labs.com/user/kguo/trdir/stream-arch-tm-99.pdf, describes a solution for caching multimedia streams in the Internet by extending existing techniques and proposing new techniques to support streaming media. These include segmentation of streaming objects, dynamic caching, and self-organizing cooperative caching. This was implemented in a complete caching architecture called SOCCER.SOCCER makes use of both static caching and dynamic caching. With this solution it is possible to have several options, depending on whether it is preferable to exploit static or dynamic caches, or to make use of unicast or multicast techniques.

### Summary of the invention

The aim of the present invention is to effect a procedure that solves above problems. This object is achieved by distribution of streaming media according to the steps that are described in enclosed patent claim 1.

The invention also relates to a system for distribution, according to above mentioned procedure, of streaming media, which is drawn up according to the enclosed patent claim 10.

The basis of the invention is an idea that a distributor shall be able to offer to a content provider improved possibilities to offer, transmit and provide streaming media to an end consumer. A basic idea, and important advantage, of the invention is that the distributor provides the possibility of caching the transmitted material, at which the distributor attends to that the end consumer, at his/her request, will have this material, forwarded in a way that is adapted to the end consumers wishes and needs.

Distribution of streaming media in an IP-network is consequently made, according the invention, according to an agreed policy between a content provider and a distributor, at which the by the content provider by IP-multicast transmitted media is cached in a cache system before being forwarded to the end consumer. How the caching is made is controlled by the policy that is set up between the content provider and the distributor.

From one aspect the present invention is aiming at removing several of the problems that arise at insufficient bandwidth in the IP-network between a content provider and an end consumer. This is attained by a procedure according to which streaming media, which initially is transmitted by a content provider, is cached in a cache system according to a defined policy, whereupon said streaming media is forwarded to, and at request of, an end consumer. After an initial transmission from the content provider by IPmulticast, said streaming media can be transmitted to a plurality of cache systems, and to a plurality in these cache systems included media caches, without the load on the network becoming absurdly high. An end consumer after that can have said media from the media cache, which is closest to his/her user terminal in the network, forwarded.

Furthermore, the end consumer can request a media quality that is adapted to the bandwidth that exists between said media cache and the user terminal.

From another aspect, the invention effects mechanisms for securing of quality of delivery in the IP-network between a content provider and an end consumer. According to the invention, measuring functions are attained, which decide which media caches that are best suited for caching of streaming media in the light of the load of the IPnetwork, the location of potential end consumers in the network, the network location of end consumers who have already made a request for forwarding of streaming media, and in which media caches that different transmissions are cached.

From another aspect, the present invention effects a. procedure that gives an end consumer increased accessibility to streaming media that initially is transmitted by a content' provider. A procedure according to the invention includes caching of streaming media in a cache system, from where the end consumer can request forwarding of said streaming media at just any point of time.

From another aspect, the invention provides a possibility to the end consumer to indicate which bandwidth he/she has at disposal, at which the cache system adapts forwarding according to specified bandwidth. For instance, the image or sound quality of said streaming media can be reduced to a level that is adapted to the available bandwidth.

The present invention in also provides a plurality of other possibilities and advantages, which will be evident from the following description of some embodiments.

Different aims and characteristics also will be more evident as the description of these embodiments are read.

### Brief description of the drawing

In the following, description of a number of embodiments of the invention is referred to the enclosed drawing, which shows included units in a system according to the present invention and data streams through the system.

### Description of preferred embodiments

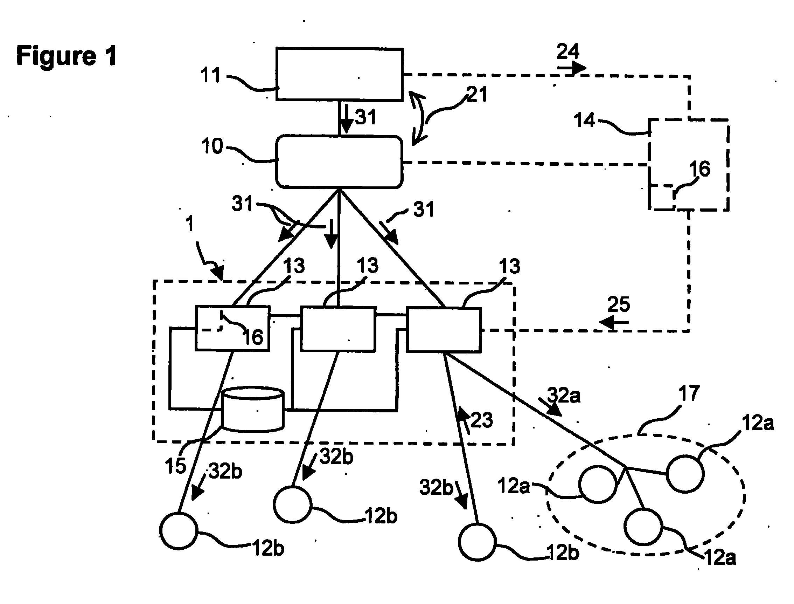

With reference to Figure 1, initially a number of preferred services, functions and procedures in a system according to the present invention will be described by means of examples. The invention, however, is in no way limited to the exemplified services and functions.

Figure 1 shows a cache system 1, which includes a number of media caches 13 and a host server 15. The system is controlled by a management center 14, according to a policy 21, which is set up between a content provider 11 and a distributor 10. End consumers 12 follow transmissions from the content provider 11 under forwarding via a media cache 13. Examples of how media can be distributed from the content provider 11 to the end consumer 12 are given below.

The distributor 10 and the content provider 11 set up a policy 21, which controls the rights and duties of respective party. One policy, for instance, informs about how long certain media material shall be cached in one by the distributor 10 managed cache system 1, with which bandwidths the material shall be available to the end consumer 12, and with which degree of reliability the Consumer 12 shall have possibility to access the material. The content provider 11 starts at a certain point of time, for instance at 9.00 p.m., transmission 31 from a server by IP-multicast of streaming media, for instance a film. This film can possibly be followed directly by one or more end consumers 12. More important, however, is that the film is followed, according to the invention, by the media caches 13 in the cache system 1, which cache at least parts of the transmitted film 31, according to the with the content provider set up policy 21, by which transmitted media is transmitted from the content provider 11 to the cache system 1.

Preferably, the whole film is stored in respective media cache 13. Instead of following the film by IP-multicast, the media caches 13 can receive an earlier arranged transmission, so called "pre-streaming", of the film from the content provider 11. This "pre-streaming" can, for instance, have been performed at 8.30 p.m. in this example. The end consumer 12 now has a plurality of options when he/she shall watch the film. If "pre-streaming" has been performed, the end consumer can choose to follow the film, at the occasion of the content provider's direct transmission, from one of the media caches 13, instead of directly from the content provider 11. This can, for instance, be to advantage if said media cache 13 is, in the network, located much closer to the end consumer 12 than is the case with the content provider's server 11. Planned transmissions are, for instance, advertised via web pages, or via direct e-mail, to interested end consumers 12. A certain end consumer requests forwarding of a specific transmission by transmitting a universally valid identification (ID) to a multicast group (not shown). The identification includes, for instance, the end consumer's IP-address and a URN (Uniform Resource Name), which describes the requested transmission. A media cache 13, in which the requested material is cached, and which in addition has capacity to forward this, responds with an information about at which local IF-addresses the material can be derived, or- with an URL (Uniform Resource Locator) which in its turn returns the local. IP-addresses. These IP-addresses can, for instance, be the own IP-number of the media cache (at forwarding with unicast) or a multicast group. At forwarding of previously transmitted material as above, IP-multicast 32a is suitably utilized also for the final transmission from the cache system 1 to the end consumer 12.

End consumers who receive forwarded transmission from the cache system 1 by multicast are in the figure indicated by the general reference designation 12a. In the case that the end consumer 12 should join the cache system 1, after the regular transmission has started, there is a possibility of fast-winding through the missed material (the missed part of the film), whereupon the end consumer 12 joins the regular transmission. With the aim of facilitating for the end consumer to scan through the part 'of the material that he/she has missed, an indexing function based on, for instance, a number of "key frarnes", is preferably implemented. The fast-winding is preferably transmitted directed to just this end consumer (unicast) 32b. End consumers who receive forwarded transmission from the cache system by unicast are in the figure designated by the general reference designation 12b.

In the cases when the connection to the content provider's server is poor, for instance if the cache system again and again has to ask for repetition 22 of lost data packets, a "delayed direct transmission". can be utilized. In this example, this "delayed direct transmission" can, as a suggestion, start for instance 9.15. p.m., by which the cache system 1 is given plenty of time for caching of the from the content provider transmitted film. For economizing with network resources, also the transmission of the cached material is preferably made by IP-multicast.

After the transmission, the film should be accessible in the cache system 1 for a further period of time. An end consumer 12 then can on demand have the film forwarded from the cache system 1 at just any point of time. Such forwarding is suitably made by unicast 32b. In the cases when a certain transmission, for instance an important news feature, is expected to be requested by a large number of end consumers, the forwarding is suitably somewhat delayed, whereby a plurality of end consumers will have time to transmit a request for watching the film. The requested film then can be transmitted, by IP-multicast 32a, to these end consumers within, for instance, 30 seconds. Alternatively, the end consumer can have information about when the next transmission from the cache system 1 will occur.

The system can also be configured so that the end consumer 12 himself/herself is content provider. He/she consequently has possibility to store private material in the cache system 1, for instance a holiday film, whereupon the material can be forwarded to a multiple of other end consumers, for instance the fellow travellers. Since a plurality of end consumers are expected to want to study the material, the transmission is suitably made by IPmulticast 32a.

The end consumer 12 also has possibility to record a certain transmission in order to watch it on a later occasion. In this way, the end consumer can make sure that the multimedia material (for instance a film or a radio transmission) is in the cache system until final forwarding is requested.

The cache system (i.e. the media caches) can forward a transmission with different coding formats and with different resolutions or sound quality, and in that way adapt the material to different types of terminals at the end consumer 12.

With reference to Figure 1, now a preferred system according to the present invention will be described. The most important functions are effected by a number of media caches 13, which are coordinated in a cache system 1, and at lest one management center 14. The management center can; possibly be distributed in the system, which in the figure is indicated by showing it with dashed lines.

The media caches 13 listen for requests 23 about: transmissions of cached media. An end consumer 12 transmits, for instance, a request that contains his/her IP-address and a URN that identifies the requested media material. If the called media cache contains the requested material, and in addition is not too heavy loaded, said media cache responds to said request by forwarding the requested material to the end consumer.

The function 1 of the cache system against the content provider 11 is, according to the set up policy 21 and the directions of the management center 14, to follow and store by the content provider 11 transmitted material, i.e. attend to that the media material is transmitted to the cache system 1. The storing is made either by following of transmissions in progress, or by storing of a "pre-streaming" in progress. The management center listens for requests 24 from the content provider 11, about caching of streaming media. Such a request includes, for instance, among other things, information about which multicast address that shall be used, when the transmission shall start, which multicast address that shall be used for secure transmission, URN for the material, as well as a URL for further information about the transmission. The management center 14 also indicates which media caches 1.3 that shall be utilized, and initiates 25, if required, moving of media material between the media caches 13. In certain cases, the by the content provider 11 transmitted media is stored in a host server 15, which primarily is intended for longer caching. The host server 15 consequently is a special case of the media cache 13, for storing of media during a longer period of time. The policy 21 controls how long, and in which formats, the material shall be cached in the cache system 1. Said policy also controls which media caches 13 and/or host servers 15 that shall be engaged at each transmission. A policy can be formulated as *"All material from the news agency NN shall be stored in at least 5 media caches for at least: 180 minutes", or "After 3 requests for a certain material being received by a certain media cache, and the requested material* not found *cached in this media cache, the material will be distributed there*." The system also includes a measuring function 16, which attends to requests that are coming to the cache system 1 from the end consumers 12, and analyses which of the media caches 13 that is best suited for forwarding of the requested material. Which media cache that is best suited is decided, for instance, on basis of the content in respective media cache 13, the end consumer's 12 location in the network in relation respective media cache 13, and the load on the network, i.e. how much traffic that at the moment is passing through the network between respective media cache 13 and said end consumer 12. The coordination of the content etc. of the media caches 13 is suitably made by means of SCSP (Server Cache Synchronization Protocol). The necessary information is collected by the measuring function 16 of the system, whereupon the management center 14 decides which content that shall be stored in respective media cache 13. Said measuring function is preferably implemented distributed in the network, for achieving a high efficiency. The measuring function 16, for instance, can be implemented as a part of the management center 14, or as a part of a media cache 13. The measuring function also can attend to finding out the location in the network of an end consumer 12, finding out which media cache 13 that is closest a certain end consumer, or finding out the media content of respective media cache 13. The algorithm that is used in the system is selected by the expert from case to case. A brief example of a cache algorithm is:
1. Store the material at a central place in the system, alternatively at a sufficiently large number of places, to secure a reliable access to the material.
2. At a certain number of requests for the material (for instance 3) from the same place, copy the material to the media cache that in the network is closest to this place. Said copying of the material is preferably made by TP-multicast on an occasion when an end consumer requests said material. The material then is stored, for instance, by synchronous caching.

Final forwarding to the end consumer 12 is made either by multicast 32a, or by unicast 32b. Below follow two examples of how forwarding can be executed.

*Multicast.* The content provider has advertised a transmission which an end consumer. 12a in a multicast group 17 joins. This can, for instance, be the case at "prestreaming" or "delayed direct transmission". The advantages for the end consumer 12a is, in this case, that the quality of the transmission can be kept high, and that the transmission can be shown at a, for the intended end consumer, appropriate point of time. For instance, the original transmission from the content provider 11, has taken place at a point of time when it was night at the end consumers 12a in the multicast, group 17.

Unicast. The cached material can be accessed by an end consumer 12b at just any point of time. The end consumer transmits a request, which includes a URN, to a multicast group (not shown), which is listened in to by the media caches 13. This request can have a limited administrative scope (controlled-by for instance, "multicast administrative scope" or TTL), which is gradually extended until a media cache responds. The response includes the physical address of the material in form of a URL. A similar function can be used also at multicast, when instead physical addresses are returned by SDP (Session Description Protocol). An efficient division of load can by that be effected in the network, thanks to the media caches, which are listening and responding to requests, and the measuring function. A media cache responds only if it has the material in question stored, and if it has sufficient of resources to forward the material.

## Claims

1. Procedure, for policy controlled distribution of streaming media in an IP-network, at which a transmission (31) by IP-multicast of streaming media is distributed from a content provider (11) via a distributor (10) to an end consumer (12a, 12b), which procedure includes the steps:
- to set up a policy (21) between the content provider and the distributor, which policy decides how the streaming media, transmitted by the content provider, shall be handled by the distributor,
- to configure, according to the set up policy, a cache system (1) for caching of said streaming media,
- to wait for a request (23) from an end consumer for forwarding of streaming media,
- to measure the load on the network between the end consumer and the cache system,
- to select on basis of the end consumer's location in the network and the result of the step to measure the load in the network, the media cache in the cache system that is best suited for forwarding of said streaming media to said end consumer,
- to transmit said streaming media to the selected media cache, and
- to forward (32a, 32b), as response to a request from an end consumer, at least parts of said streaming media to the end consumer from the selected media cache.

2. Procedure, as claimed in patent claim 1, where the step to configure a cache system further includes the steps
to detach a number of media caches (13) to be part of said cache system, which media caches are intended for caching of said streaming media.

3. Procedure as claimed in any of the patent claims 1 or 2, where the step to transmit the by a content provider transmitted media to the cache system further includes the steps:
- to wait for a request (24) from a content provider for distribution of streaming of media,
- to transmit, according to the set up policy-and as response to a request from a content provider, said streaming media to one or more media caches (13) in the cache system (1), and
- to request repetition of transmission (22) of at least parts of said streaming media to a certain media cache if the, transmission has failed.

4. Procedure, as claimed in patent claim 3, where repeated transmission of parts of said streaming media, as response to the step to request repetition of at least parts of said streaming media to a certain media cache is made directly from said content provider.

5. Procedure, as claimed in patent claim 3, where repetition of transmission of parts of said streaming media, as response to the step to request repetition of transmission of at least parts of said streaming media to a certain media cache is made from anothermedia cache, included in the cache system, to which another media cache the original transmission of said streaming media was successful.

6. Procedure, as claimed in patent claim 5, which further includes the steps:
- to find out, on basis of the end consumer's location in the network and the measured load on the network, that there is at least one media cache that is better suited for forwarding of the media cached in the cache system, than the media caches which for the time being are utilized, and
- that at least partly transmit in the cache system cached media to at least one media cache that is better suited for forwarding of the media cached in the cache system, to the end consumer, than the media caches that are utilized for the time being.

7. Procedure, as claimed in any of the patent claims above, where the set up of said policy includes deciding at least one/any of the following:
- in which data formats said streaming media shall be accessible to the end consumer,
- in which media caches said streaming media shall be accessible to the end consumer,
- how long time said streaming media shall be cached in the cache system, and by that be accessible to the end consumer,
- by what degree of reliability said streaming media shall be accessible by the end consumer.

8. Procedure, as claimed in any of the patent claims above, where the step to forward said streaming media to the end consumer at least partly is made at request of said end consumer, by means of fast-winding.

9. Procedure, as claimed in patent claim 8, where the cached media material includes a number of key frames, for facilitating the end consumer's request for fast-winding, at which the end consumer in a simple way finds requested part of the media stream.

10. System for policy controlled distribution of streaming media in an IP-network that includes
- a cache system (1), which is arranged to receive and cache streaming media (31) that is transmitted by IP-multicast from a content provider (11), and to forward, at request of an end consumer (12a, 12b), said streaming media to said end consumer,
- wherein said cache system (1) includes a number of media caches (13), which are intended for caching of streaming of media,
- devices (16) for finding out the location in the network of said end consumer who has requested forwarding of streaming media,
- devices (16) for finding out the media cache (13), included in the cache system (1), which is closest to the end consumer who has requested forwarding of streaming media, and
- a management center (14), which is arranged to configure the cache system (1) according to one policy (21) set up between the content provider (11) and a distributor (10).

11. System, as claimed in the patent claim 10, further including devices (16) for finding out the media content in: respective media cache.

## Patentansprüche

1. Verfahren für politikgesteuerte Verteilung von Streaming-Medien in einem IP-Netz, bei welchem eine Übertragung (31) durch IP-Multicast von StreamingMedien von einem Content-Anbieter (11) über einen Verteiler (10) zu einem Endverbraucher (12a, 12b) verteilt wird, welches Verfahren die Schritte einschließt:
- eine Politik (21) zwischem dem Content-Anbieter und dem Verteiler einzurichten, welche Politik entscheidet, wie die Streaming-Medien, die durch den Content-Anbieter übertragen werden, durch den Verteiler gehandhabt werden sollen,
- gemäß der eingerichteten Politik ein Cache-System (1) zum Cache-Speichern der Streaming-Medien zu konfigurieren,
- auf eine Anforderung (23) von einem Endverbraucher, Streaming-Medien zu schicken, zu warten,
- die Belastung des Netzes zwischen dem Endverbraucher und dem Cache-System zu messen,
- aufgrund des Standorts des Endverbrauchers im Netz und dem Ergebnis des Schrittes, die Belastung im Netz zu messen, den Medien-Cache im Cache-System auszuwählen, der am besten geeignet ist, die Streaming-Medien zu dem Endverbraucher zu schicken,
- die Streaming-Medien zu dem ausgewählten Medien-Cache zu übertragen,
- als Antwort auf eine Anforderung von einem Endverbraucher wenigstens Teile der Streaming-Medien zum Endverbraucher von dem ausgewählten Medien-Cache zu schicken (32a, 32b).

2. Verfahren nach Patentanspruch 1, wobei der Schritt, ein Cache-System zu konfigurieren, weiter den Schritt einschließt:
- eine Anzahl von Medien-Caches (13) zu dem Teil des Cache-Systems abzutrennen, welche Mediem-Caches zum Cache-Speichern der Streaming-Medien bestimmt sind.

3. Verfahren nach einem der Patentansprüche 1 oder 2, wo der Schritt, die durch einen Content-Anbieter übertragenen Medien zum Cache-System zu senden, weiter die Schritte einschließt:
- auf eine Anforderung (24) von einem Content-Anbieter für Verteilung von Streaming von Medien zu warten,
- gemäß der eingerichteten Politik und als Reaktion auf die Anforderung von einem Content-Anbieter die Streaming-Medien zu einem oder mehreren Caches (13) im Cache-System (1) zu senden, und
- Wiederholung der Übertragung (22) von wenigstens Teilen der Streaming-Medien zu einem gewissen Medien-Cache anzufordern, wenn die Übertragung versagt hat.

4. Verfahren nach Patentanspruch 3, wo wiederholte Übertragung von Teilen der Streaming-Medien als Reaktion auf den Schritt, Wiederholung von wenigstens Teilen der Streaming-Medien zu einem gewissen Medien-Cache anzufordern, direkt vom Content-Anbieter vorgenommen wird.

5. Verfahren nach Patentanspruch 3, wo Wiederholung von Übertragung von Teilen der Streaming-Medien als Reaktion auf den Schritt, Wiederholung von Übertragung wenigstens von Teilen der Streaming-Medien zu einem gewissen Medien-Cache anzufordern, von einem anderen Medien-Cache vorgenommen wird, der im Cache-System eingeschlossen ist, zu welchem anderen Medien-Cache die ursprüngliche Übertragung der Streaming-Medien erfolgreich war.

6. Verfahren nach Patentanspruch 5, das weiter die Schritte aufweist:
- aufgrund des Standorts des Endverbrauchers im Netz und der gemessenen Belastung des Netzes herauszufinden, dass es wenigstens ein Medien-Cache gibt, der besser zum Schicken der Medien geeignet ist, die im Cache-System cache-gespeichert sind, als die Medien-Caches, die zur Zeit gerade benutzt werden, und
- dass wenigstens teilweise im Cache-System cachegespeicherte Medien zu wenigstens einem Medien-Cache gesendet werden, der besser zum Schicken der Medien, die in dem Cache-System cache-gespeichert sind, zum Endverbraucher geeignet ist als die Medien-Caches, die gerade benutzt werden.

7. Verfahren nach einem der obigen Patentansprüche, wo das Einrichten der Politik es einschließt, wenigstens eine/irgendeine des Folgenden zu entscheiden:
- in welchen Datenformaten die Streaming-Medien für den Endverbraucher zugänglich sein sollen,
- in welchen Medien-Caches die Streaming-Medien für den Endverbraucher zugänglich sein sollen,
- wie lange Zeit die Streaming-Medien im Cache-System cache-gespeichert werden sollen und **dadurch** für den Endverbraucher zugänglich sein sollen,
- durch welchen Grad der Zuverlässigkeit die Streaming-Medien durch den Endverbraucher zugänglich sein sollen.

8. Verfahren nach einem der obigen Patentansprüche, wo der Schritt, die Streaming-Medien zum Endverbraucher zu schicken, wenigstens teilweise auf Anforderungen des Endverbrauchers mit Hilfe von schnellem Spulen durchgeführt wird.

9. Verfahren nach Patentanspruch 8, wo das cachegespeicherte Medienmaterial einer Anzahl von Schlüsseldatenblöcken oder -bildern einschließt, um die Anforderung des Endverbrauchers für schnelles Spulen zu erleichtern, wobei der Endverbraucher auf einfache Weise einen gewünschten Teil des Meiden-Streams findet.

10. System für politik-gesteuerte Verteilung von Streaming-Medien in einem IP-Netz, das einschließt,
- ein Cache-System (1), das dazu ausgebildet ist, Streaming-Medien (31) zu empfangen und zu cache-speichern, die durch IP-Multicast von einem Content-Anbieter (11) übertragen werden, und auf Anforderung eines Endverbrauchers (12a, 12b) die Streaming-Medien zu dem Endverbraucher zu schicken,
- wobei das Cache-System (1) eine Anzahl von Medien-Caches (13) einschließt, die zum Cache-Speichern von Streaming von Medien bestimmt sind,
- Einrichtungen (16) zum Herausfinden des Standortes des Endverbrauchers im Netz, der Schicken der Streaming-Medien angefordert hat,
- Einrichtungen (16) zum Herausfinden des Medien-Caches (13), der im Cache-System (1) eingeschlossen ist, der dem Endverbraucher am nächsten ist, der Schicken von Streaming-Medien angefordert hat, und
- ein Verwaltungszentrum (14), das dazu ausgebildet ist, das Cache-System (1) gemäß einer Politik zu konfigurieren, die zwischen dem Content-Anbieter (11) und einem Verteiler (10) eingerichtet ist.

11. System nach Patentanspruch 10, das weiter Einrichtungen (16) zum Herausfinden des Medieninhalts in entsprechendem Medien-Cache einschließt.

## Revendications

1. Procédé de distribution, commandé par règle, de supports d'enregistrement continu sur un réseau IP (protocole Internet), sur lequel une transmission (31) par diffusion multiple IP de supports d'enregistrement continu est distribuée à partir d'un fournisseur de service (11) par l'intermédiaire d'un distributeur (10) à un consommateur final (12a, 12b), lequel procédé comporte les étapes :
d'établissement d'une règle (21) entre le fournisseur de service et le distributeur, laquelle règle décide de la manière par laquelle les supports d'enregistrement continu, transmis par le fournisseur de service, doivent être gérés par le distributeur,
de configuration, en fonction de la règle établie, d'un système d'antémémoire (1) destiné à conserver en antémémoire lesdits supports d'enregistrement continu,
d'attente d'une demande (23) à partir d'un consommateur final de transmission de supports d'enregistrement continu,
de mesure de la charge sur le réseau entre le consommateur final et le système d'antémémoire,
de sélection, sur la base de remplacement du consommateur final sur le réseau et du résultat de l'étape de mesure de la charge sur le réseau, de l'antémémoire de supports sur le système d'antémémoire qui est la mieux appropriée afin d'assurer la transmission desdits supports d'enregistrement continu audit consommateur final,
la transmission desdits supports d'enregistrement continu à ladite antémémoire de supports sélectionnée, et
le transfert (32a, 32b), en réponse à une demande d'un consommateur final, d'au moins des parties desdits supports d'enregistrement continu audit consommateur final à partir de l'antémémoire de supports sélectionnée.

2. Procédé, selon la revendication 1, dans lequel l'étape de configuration d'un système d'antémémoire comporte, en outre, l'étape :
de séparation d'un certain nombre d'antémémoires de supports (13) afin de former des parties dudit système d'antémémoire, lesquelles antémémoires de supports sont destinées à conserver en antèmémoire lesdits supports d'enregistrement continu.

3. Procédé selon l'une quelconque des revendications 1 ou 2, dans lequel l'étape de transmission, par un fournisseur de service, de supports transmis au système d'antémémoire comporte, en outre, les étapes:
d'attente d'une demande (24) à partir d'un fournisseur de service afin d'assurer la distribution de supports d'enregistrement continu,
de transmission, en fonction de la règle établie - et en réponse à une demande d'un fournisseur de Service, desdits supports d'enregistrement continu à une ou plusieurs antémémoires de supports (13) dans le système d'antémémoire (1), et
de demande de répétition de transmission (22) d'au moins de parties desdits supports d'enregistrement continu à une certaine antémémoire de supports si la transmission a échoué.

4. Procédé, selon la revendication 3, dans lequel la répétition de transmission de parties desdits supports d'enregistrement continu, en réponse à l'étape de demande de répétition d'an moins certaines parties desdits supports d'enregistrement continu à une certaine antémémoire de supports est réalisée directement à partir dudit fournisseur de service.

5. Procédé, selon la revendication 3, dans lequel la répétition de transmission de parties desdits supports d'enregistrement continu, en réponse à l'étape de demande de répétition de transmission d'au moins des parties desdits supports d'enregistrement continu à une certaine antémémoire de supports est réalisée à partir d'une autre antémémoire de supports, contenue dans le système d'antémémoire, vers laquelle autre antémémoire de supports la transmission initiale desdits supports d'enregistrement continu a été réussie.

6. Procédé, selon la revendication 5, qui comporte, en outre, les étapes :
d'extraction, sur la base de la position du consommateur final dans le réseau et de la charge mesurée sur le réseau, du fait qu'il existe au moins une antémémoire de supports qui est mieux appropriée afin d'assurer la transmission des supports conservés en antémémoire dans le système l'antémémoire, que les antémémoires de supports qui pour le moment sont utilisées, et
qui transmet au moins partiellement dans la système l'antémémoire, des supports conservés en antémémoire à au moins une antémémoire de supports qui est mieux appropriée afin d'assurer la transmission des supports conservés en antémémoire dans le système antémémoire, au consommateur final, que les antémémoires de supports qui sont utilisées pour le moment.

7. Procédé, selon l'une quelconque des revendications précédentes, dans lequel l'établissement de ladite règle comporte la prise de décision sur au moins l'un quelconque des points suivants :
sous quels formats de données lesdits supports d'enregistrement continu doivent-ils être accessibles au consommateur final,
dans quelles antémémoires de supports lesdits supports d'enregistrement continu doivent être accessibles au consommateur final,
combien de temps lesdits supports d'enregistrement continu doivent-ils être conservés en antémémoire dans le système d'antémémoire, et de ce fait, être accessibles au consommateur final,
avec quel degré de fiabilité lesdits supports d'enregistrement continu doivent-ils être accessibles au consommateur final.

8. Procédé, selon l'une quelconque des revendications précédentes, dans lequel l'étape de transmission desdits supports d'enregistrement continu au consommateur final est réalisée au moins partiellement à la demande dudit consommateur final, au moyen d'un enroulement rapide.

9. Procédé, selon la revendication 8, dans lequel le matériau de supports conservés en antémémoire comporte un certain nombre de blocs clef, afin de faciliter la demande d'enroulement rapide du consommateur final, au niveau desquels le consommateur final trouve d'une simple manière un composant demandé du flux de support.

10. Système de distribution commandé par règle de supports d'enregistremeBt continu sur un réseau IP qui comporte :
un système d'antémémoire (1), qui est agencé afin de recevoir et de conserver en antémémoires des supports d'enregistrement continu (31) qui sont transmis par diffusion multiple IP à partir d'un fournisseur de service (11), et de transmettre à la demande d'un consommateur final (12a, 12b), lesdits supports d'enregistrement continu audit consommateur final,
- dans lequel ledit système d'antémémoire (1) comporte un certain nombre d'antémérnoires de supports (13), qui sont destinés à conserver en antémémoire des supports d'enregistrement continu,
des dispositifs (16) destinés à extraire remplacement sur le réseau dudit consommateur final qui a demandé la transmission de supports d'enregistrement continu,
des dispositifs (16) destinés à extraire l'antémémoire de supports (13), contenue dans le système d'antémémoire (1), qui est la -plus proche du consommateur final qui a demande la transmission des supports d'enfegistrement continu, et
un centre de gestion (14), qui est agencé de manière à configurer le système d'antémémoire (1) selon une première règle (21) établie entre le fournisseur de service (11) et un distributeur (10).

11. Système, selon la revendication 10, comportant, en outre, des dispositifs (16) destinés à extraire les supports contenus dans l'antémémoire de supports respcetive.
